## Europäisches Patentamt
## European Patent Office
## Office européen des brevets

(11) Veröffentlichungsnummer: **0 116 657**
**B1**

(12) # EUROPÄISCHE PATENTSCHRIFT

(45) Veröffentlichungstag der Patentschrift:
16.03.88

(51) Int. Cl.⁴: **B 64 C 25/18**

(21) Anmeldenummer: **83101470.9**

(22) Anmeldetag: **16.02.83**

(54) Einziehbares Flugzeugfahrwerk.

(43) Veröffentlichungstag der Anmeldung:
**29.08.84 Patentblatt 84/35**

(45) Bekanntmachung des Hinweises auf die Patenterteilung:
**16.03.88 Patentblatt 88/11**

(84) Benannte Vertragsstaaten:
**DE FR GB**

(56) Entgegenhaltungen:
**DE-A-2 164 578**
**FR-A-2 030 087**
**FR-A-2 270 469**
**FR-A-2 402 790**
**FR-A-2 406 739**
**FR-A-2 510 511**

(73) Patentinhaber: **DORNIER GMBH, Postfach 1420,
D-7990 Friedrichshafen 1 (DE)**

(72) Erfinder: **Krojer, Hubert, Ing. grad., Hebelstrasse
3, D-7775 Bermatingen (DE)**

(74) Vertreter: **Landsmann, Ralf, Dipl.- Ing., Kleeweg 3,
D-7990 Friedrichshafen 1 (DE)**

EP 0 116 657 B1

**Beschreibung**

Die Erfindung betrifft ein einziehbares Flugzeugfahrwerk, enthaltend eine Stützstrebe, deren Längserstreckung zwischen einem Minimalwert in Abstrebstellung und einer grossen Ausfahrlänge mit Hilfe einer teleskopartig längenveränderlichen Einheit einstellbar ist und eine die Anlenkglieder der Stützstrebe an der Flugzeugzelle bzw. dem Fahrwerksbein in Arbeitsstellung verriegelnde Einheit, wobei die jeweils mit der Flugzeugzelle bzw. mit dem Fahrwerksbein verbundenen Schwenklagerteile durch die Elemente der Verriegelungseinheit unmittelbar in Stützstellung miteinander koppelbar sind.

Die Betätigung bekannter Fahrwerke der genannten Art für das Ein- bzw. Ausfahren wird mittels hydraulischer oder elektromechanischer Verstelleinrichtungen bewirkt. Häufig übernimmt die Verstelleinrichtung in der Endausfahrstellung des Fahrwerks auch dessen Abstützung.

Bekannt sind Lösungen, bei denen die Fahrwerksbetätigung für den Ein- bzw. Ausfahrvorgang lediglich die Lageänderung des Fahrwerks herbeiführt und die Abstützfunktion in Endausfahrstellung durch eine zusätzliche Einrichtung bewirkt wird. Derartige Einrichtungen sind bekannt als einfache Teleskopstreben oder als Knickstreben in verschiedenen Ausführungsformen. Probleme bestehen insbesondere bei der Anordnung des Fahrwerks bei engen Raumverhältnissen und ungünstigen Anschlussmöglichkeiten der Fahrwerksstreben und der Verstelleinrichtung an der Flugzeugzelle. Die genannten Verhältnisse lassen häufig die Verwendung einfacher Knickstreben nicht zu, sondern erfordern kinematisch aufwendige Hilfseinrichtungen, die wegen der geforderten Lastaufnahmefähigkeit entsprechend dimensioniert werden müssen und dadurch einen entsprechend grossen Einfahrraum beanspruchen. Ausserdem resultiert daraus auch ein relativ hohes Fahrwerksgewicht.

Ferner sind einziehbare Flugzeugfahrwerke bekannt, die eine Stützstrebe in der Art einer teleskopartig längenveränderlichen Einheit in Verbindung mit einer Verriegelungseinheit aufweisen, wobei die Verriegelungseinrichtung in Ausfahrlage des Fahrwerksbeines die beiden Elemente der längenveränderlichen Einheit zusammenschliesst. Bei den bekannten Ausbildungen ist die Verriegelungseinheit und deren Betätigung innerhalb der rohrförmigen Teleskopelemente der Stützstrebe angeordnet (FR-A-2 270 469, ensprechend den Merkmalen nach dem Oberbegriff des Anspruchs 1; FR-A-2 402 790).

Grosse Ausfahrlängen der Strebe, bedingt durch einen besonders grossen Verstellweg des Fahrwerksbeines und die Lage der Anlenkung der Stützstrebe am Fahrwerksbein bzw. an der Flugzeugzelle, erfordern die Anordnung von mehr als zwei Teleskopelementen. Dies ist vor allem auch dann notwendig, wenn zusätzlich die Forderung besteht, dass die Stützstrebe in Arbeitsstellung (Arretierstellung) bei ausgefahrenem Fahrwerksbein eine möglichst geringe Längserstreckung aufweisen soll.

Eine solche Forderung kann sich aus einem mangelnden Raumangebot zur Unterbringung der Stützstrebe ergeben. Darüberhinaus besteht jedoch die Bestrebung, die Knicksteifigkeit der Strebe durch eine möglichst geringe Bemessung der Streben-Längserstreckung zu erhöhen.

Bei einer grösseren Anzahl von Teleskopelementen ist die Anordnung einer Verriegelungseinheit innerhalb der rohrförmigen Elemente, wie bei den bekannten Ausbildungen, nicht einsetzbar.

Aufgabe der vorliegenden Erfindung ist es, eine Fahrwerksanordnung zu schaffen, die sich auf kleinstmöglichem Raum unterbringen lässt und die eine wesentliche Reduzierung des Fahrwerksgewichts zulässt. Ferner ist es Aufgabe der Erfindung, die Anordnung der Fahrwerksabstützung in Endausfahrlage so zu gestalten, dass nur kleine Knicklängen während der Lastlage wirksam sind und daß die Zugänglichkeit zur Verriegelungseinheit verbessert wird.

Die gestellte Aufgabe ist erfindungsgemäss durch die Merkmale des Anspruchs 1 und in weiterer vorteilhafter Ausgestaltung nach den Merkmalen der weiteren Ansprüche gelöst.

Ein so ausgebildetes Flugzeugfahrwerk kann auch bei geringstmöglichen Raumverhältnissen für die Einfahrlage im Fahrwerksschacht der Flugzeugzelle ingesetzt werden. Infolge der Ausbildung, bei der die Elemente der teleskopartig längenveränderlichen Einheit auch in der Endausfahrstellung des Fahrwerks unbelastet sind, können deren Abmessungen geringstmöglich ausgeführt sein, woraus eine wesentliche Verminderung des Fahrwerksgewichts resultiert. Die erfindungsgemässe Ausbildung führt auch zu einer Anordnung der Stützstrebe mit nur geringer Knicklänge während der Lastlage.

Infolgedessen, dass gemäss der Erfindung die Verriegelungseinheit sowie deren Betätigungsglieder konzentrisch ausliegend zu den Teleskopelementen angeordnet sind, kann vorteilhafterweise zumindest das eine der beiden jeweils miteinander in Arretierstellung der Stützstrebe zu verriegelnde Anlenkglied für die Anlenkung an der Flugzeugzelle bzw. am Fahrwerksbein als Element der längenveranderlichen Einheit (15) ausgebildet sein.

Die erfindungsgemässe Ausbildung erlaubt auch die Anordnung einer grosse Anzahl von Teleskopelementen für grössere Ausfahrlängen bei geringstmöglicher Längserstreckung der Stützstrebe in Arbeitsstellung und die unmittelbare Verriegelung der beiden Anlenkglieder für die Anlenkung der Stützstrebe an der Flugzeugzelle bzw. dem Fahrwerksbein ohne die Zuordnung von Zwischengliedern, durch welche die Steifigkeit der Stützstrebe wesentlich beeinträchtigt würde.

Die Anordnung der Verriegelungseinheit und deren Betätigung koaxial aussen liegend zur Teleskopeinheit, ergibt ferner eine verbesserte Zugänglichkeit für Wartungsarbeiten und Reparatur, sowie grössere Freiheit in der Dimensionierung der Bauelemente.

In der Zeichnung ist ein Ausführungsbeispiel gemäss der Erfindung dargestellt. Die Ausführung ist nachfolgend beschrieben.

Es zeigen:

Fig. 1 und 2 in schematischer Darstellung und in Seitenansicht die Fahrwerkseinheit einer Flugzeugseite, wobei sich das Fahrwerk nach Fig. 1 in der Endausfahrstellung und nach Fig. 2 in der Endeinfahrstellung befindet;

Fig. 3 Einzelheiten der Verriegelungseinrichtung in einem teilweisen Längsschnitt mit gegenüber den Fig. 1 und 2 vergrössertem Maßstab in Endausfahrstellung des Fahrwerks, und

Fig. 4 das Fahrwerksbein in Einfahrstellung in einer Übersichtsdarstellung, teilweise im Längsschnitt und gegenüber Fig. 3 verkleinertem Maßstab.

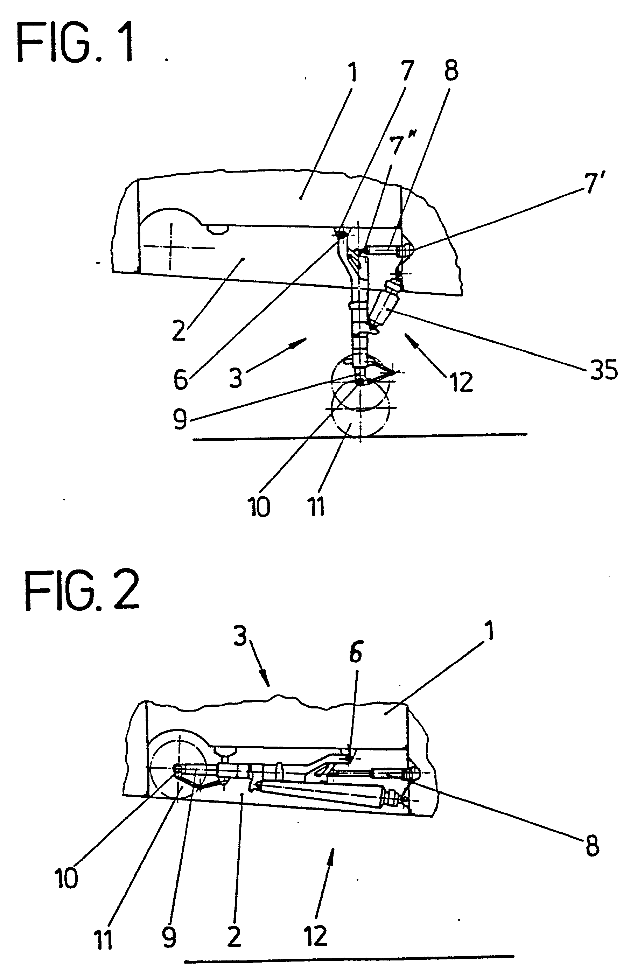

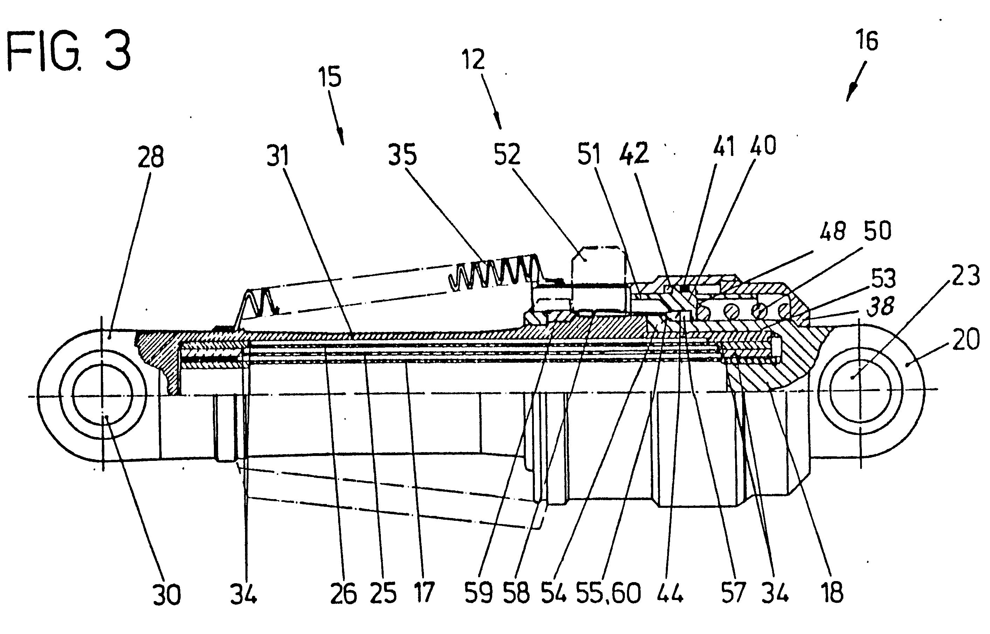

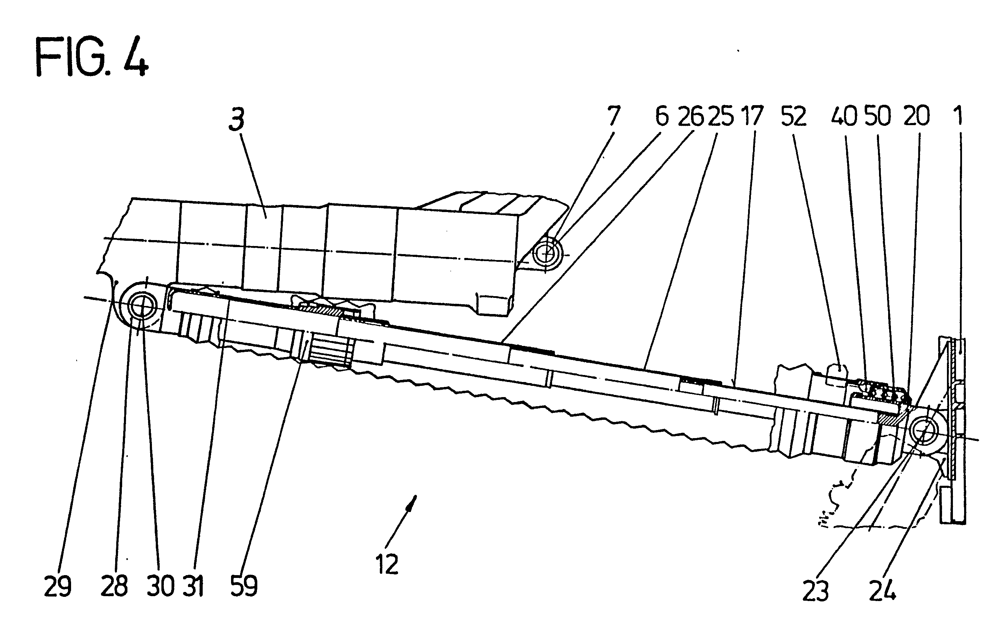

Wie die Fig. 1 und 2 erkennen lassen, ist mit 1 die Flugzeugzelle und mit 2 der Fahrwerksschacht bezeichnet. An der Flugzeugzelle 1 ist das Fahrwerksbein 3 schwenkbar gelagert und zwar um die Schwenkachse 6, die durch den Lageransatz 7 der Zelle 1 aufgenommen ist. Das Fahrwerksbein 3 ist durch einen hydraulisch betätigbaren Stellmotor 8 verstellbar, der mittels eines Schwenklagers 7' an der Flugzeugzelle 1 und einem entsprechenden Schwenklager 7'' am Fahrwerksbein 3 gelenkig angreift. Das Fahrwerksbein 3 weist ferner ein federnd gehaltenes Teleskopteil 9 auf, welches das Lager 10 für das Fahrwerksrad 11 trägt. Gemäss Fig. 1 bis 4 ist ferner zwischen dem Fahrwerksbein 3 und der Flugzeugzelle 1 eine Stützstrebe 12 angeordnet, die sich aus einer teleskopartig längenveränderlichen Einheit 15 und einer Verriegelungseinheit 16 zusammensetzt. Die teleskopartig längenveränderliche Einheit der Stützstrebe 12 weist einen inneren Führungszylinder 17 auf, der auf einem Ansatz 18 eines Schwenklagerteils 20, für die Anlenkung an der Flugzeugzelle 1, befestigt ist. Mittels der Schwenkachse 23 lagert sich das Schwenklagerteil 20 über den Lageransatz 24 an der Flugzeugzelle 1 (Fig. 4). Konzentrisch zum inneren Führungszylinder 17 sind Teleskopelemente 25 bzw. 26 angeordnet, die axial gegeneinander und gegenüber dem inneren Führungszylinder 17 beweglich sind. Es ist ferner ein Schwenklagerteil 28 vorgesehen, welches über eine Lagerachse 30 und einen Lageransatz 29 gelenkig am Fahrwerksbein 3 angreift (Fig. 4). Das Schwenklagerteil 28 trägt konzentrisch zu den Teleskopelementen 25 bzw. 26 angeordnet einen äusseren Führungszylinder 31, der Teil der Verriegelungseinheit 16 ist. Die Teleskopelemente 25 bzw. 26 und der äussere bzw. innere Führungszylinder 31 bzw. 17 sind mit Mitnahmevorsprüngen 34 versehen, durch die die Teleskopelemente von den Schwenklagerteilen 20 bzw. 28 mitgenommen werden und die ferner auch eine Begrenzung des Ausfahrweges der Teleskopelemente gegenüber dem inneren bzw. äusseren Führungszylinder 17 bzw. 31 bewirken. Die Teleskopelemente sind zum Schutz gegen Verschmutzung nach aussen durch einen ausziehbaren Balgen 35 geschützt. Die eigentliche Verriegelungseinheit 16 wird getragen vom Schwenklagerteil 20. Das Schwenklagerteil 20 besitzt einen rohrförmigen Abschnitt 53, in den die Endabschnitte des äusseren Führungszylinders 31 und der Teleskopelemente 25 bzw. 26 in Endausfahrstellung des Fahrwerks hineinragen. Die Verriegelungseinrichtung 16 setzt sich aus einem Druckzylinder 38 und einem rohrförmigen Hydraulikkolben 40 zusammen, wobei der Druckzylinder bzw. der Hydraulikkolben das Schwenklagerteil 20 umgeben. Der Kolben 40 ist im Zylinder 38 mittels eines Kolbenringes 41 axial verstellbar. Der Kolben 40 weist ferner eine durch einen Absatz gebildete Abstützfläche 48 auf. Zwischen der Abstützfläche 48 und dem Druckzylinder 38 ist eine Zylinderschraubenfeder 50 eingesetzt, die ständig mit Vorspannung auf den Hydraulikkolben 40 einwirkt. Der äussere Führungszylinder 31 weist an seinem freien Ende eine Verriegelungshülse 59 auf, die in axialer Richtung mehrfach geschlitzt ausgeführt ist, so dass auf den Umfang verteilt eine Anzahl radial federnder Lamellen 58 gebildet sind, die sich längs des äusseren Führungszylinders 31 erstrecken und die an ihrem Ende Verriegelungsnocken 57 mit Verriegelungsflächen 55 aufweisen.

Das Schwenklagerteil 20 weist am Ende seines rohrförmigen Abschnittes 53 einen Verriegelungsansatz 54 mit einer Verriegelungsfläche 60 auf. Konzentrisch zum Aussendurchmesser der Lamellen 58 bzw. deren Verriegelungsnocken 57 besitzt der Hydraulikkolben 40 eine zylindrische Bohrungsfläche 44, die die Verriegelungsnocken 57 der Lamellen 58 in Verriegelungsstellung übergreift und mit dem Verriegelungsansatz 54 formschlüssig koppelt. Es ist ferner noch ein Endausschalter 52 vorgesehen, der durch den Hydraulikkolben 40 über dessen Ansatz 51 betätigbar ist.

Die Wirkungsweise der beschriebenen Einrichtung ist wie folgt:

Aus der in Fig. 2 gezeigten Einfahrlage des Fahrwerksbeins 3 wird beim Ausfahrvorgang der Stellmotor 8 betätigt und eine hier nicht näher beschriebene mechanische Arretierung gelöst. Dabei kommt der Stützstrebe 12 nur eine Führungsaufgabe mit Hilfe ihrer Teleskopteile 17, 25, 26 zu. Druck-bzw. Zugbelastungen nimmt die Stützstrebe 12 in der Ausfahrphase des Fahrwerksbeins 3 nicht auf. Im Bereich der Endausfahrstellung des Fahrwerksbeins 3 gelangen die Verriegelungsnocken 57 am äusseren Führungszylinder 31 in Kontakt mit dem Hydraulikkolben 40 und verschieben diesen gegen die wirkung der vorgespannten Schraubendruckfeder 50. Bei Erreichen der Endstellung der Verriegelungseinheit 16 greifen die Verriegelungsnocken 57 der radial federnden Lamellen 58 des äusseren Führungszylinders 31 über den Verriegelungsansatz 54 äm Schwenklagerteil 20 hinweg und rasten durch die radiale Federwirkung der Lamellen so ein, dass die Verriegelungsflächen 60 der Verriegelungsnocken 57 mit der Verriegelungsfläche 55 des Verriegelungsansatzes 54 am Schwenklagerteil 20 in Form einer Hinterhakung in Eingriff treten.

Innerhalb dieser Ausfahrphase ist der Kolben 40 durch entsprechende Steuerung des Druckmittels nicht beaufschlagt. Mit Hilfe der unter Vorspannung stehenden Schraubendruckfeder 50 wird nachfolgend der Kolben 40 in Richtung gegen die Verriegelungsnocken 57 verstellt. Damit übergreift die zylindrische Bohrungsfläche 44 des Kolbens 40 die Verriegelungsnocken 57 der Lamellen 58 so, dass die Verriegelungsnocken 57 mit Hilfe des Kolbens 40 zwangsläufig degen radiales Ausfedern gesichert sind. Zwischen dem Schwenklagerteil 20 und der Flugzeugzelle 1 sowie dem Schwenklagerteil 28 am Fahrwerksbein 3 ist damit eine Zwangsarretierung in beiden axialen Richtungen bewirkt und das Fahrwerksbein 3 in seiner Endausfahrstellung arretiert. In Endausfahrstellung des Fahrwerksbeins 3 sind dabei an der Verriegelung nur das Schwenklagerteil 20 mit seinem Verriegelungsteil 54 und das Schwenklagerteil 28 über den äusseren Führungszylinder 31 mit seinen Verriegelungsgliedern 58 bzw. 57 beteiligt. Zwischen dem Schwenklagerteil 28 am Fahrwerksbein 3 einerseits und dem Schwenklagerteil 20 an der Flugzeugzelle 1 andererseits besteht somit ohne Beteiligung der Teleskopelemente 17, 25 bzw. 26 eine mechanisch kurzgeschlossene Verbindung. Die Fahrwerksstrebe 12 weist dadurch in der Endausfahrstellung des Fahrwerksbeins 3 eine relativ geringe Längserstreckung auf, so dass eine unmittelbare Krafteinleitung der vom Fahrwerksbein 3 in die Flugzeugzelle 1 einzuleitenden Zug- bzw. Druckkräfte, ohne Zwischenschaltung von weiteren Abstützteilen, bewirkt ist. Daraus resultiert eine äusserst starre Verbindung zwischen dem Fahrwerksbein 3 und der Flugzeugzelle 1 mit dem Vorteil einer kurzen Knicklänge.

Für das Einfahren des Fahrwerksbeins 3 in den Fahrwerksschacht 2 wird der Kolben 40 gegen die Wirkung der Schraubendruckfeder 50 durch Beaufschlagung des Kolbens 40 mittels Druckmittelzuführung in die Druckzylinderkammer 42 gegen die Wirkung der Schraubendruckfeder 50 relativ gegenüber den Schwenklagerteilen 28 bzw. 20 verstellt und es werden die Verriegelungsnocken 57 der Lamellen 58 freigegeben. Durch die geneigt ausgebildeten Verriegelungsflächen 60 bzw. 55 am Verriegelungsansatz 54 bzw. den Verriegelungsnocken 57 federn die Verriegelungsnocken 57 radial nach außen und zwar so, dass die Nocken 57 und der Verriegelungsansatz 54 am Schwenklagerteil 28 bzw. 20 ausser Eingriff treten. Die Stützstrebe 12 kann dadurch mittels ihrer Teleskopelemente 17, 25, 26 und mittels des äusseren Führungszylinders 31 durch Betätigung des Stellmotors 8 der Einfahrbewegung des Fahrwerksbeins 3 unbelastet folgen.

Gemäss Fig. 2 ist die Einfahrstellung des Fahrwerksbeins 3 im Fahrwerksschacht 2 innerhalb der Zelle 1 gezeigt. In dieser Stellung wird das Fahrwerksbein 3 mittels der hier nicht dargestellten mechanischen Verriegelung in Einfahrlage gehalten. In Einfahrlage beansprucht die Strebe 12 durch ihre zum Stellmotor 8 achsparallele bzw. annähernd achsparallele Lage nur einen äusserst geringen Bewegungsraum innerhalb der Flugzeugzelle.

**Patentansprüche**

1. Einziehbares Flugzeugfahrwerk, enthaltend eine Stützstrebe (12), deren Längserstreckung zwischen einem Minimalwert in Abstrebstellung und einer grossen Augfahrlänge mit Hilfe einer teleskopartig längenveränderlichen Einheit (15) einstellbar ist und eine die Anlenkglieder der Stützstrebe an der Flugzeugzelle (1) bzw. dem Fahrwerksbein (3) in Arbeitsstellung verriegelnde Einheit (16), wobei die jeweils mit der Flugzeugzelle (1) bwz. mit dem Fahrwerksbein (3) verbundenen Schwenklagerteile (20 bzw. 28) durch die Elemente (57, 58 bzw. 53, 54) der Verriegelungseinheit unmittelbar in Stützstellung miteinander Koppelbar sind, dadurch gekennzeichnet, dass

a) die Verriegelungseinheit (16) und bzw. oder deren Betätigungsvorrichtung (38, 40) koaxial aussenliegend zur teleskopartig längenveränderlichen Einheit (15) angeordnet ist und dass

b) die jeweils mit der Flugzeugzelle (1) bzw. mit dem Fahrwerksbein (3) verbundenen Schwenklagerteile (20 bzw. 28) unter Umgehung der Elemente (17, 25, 26) der teleskopartig längenveränderlichen Einheit (15) mit Ausnahme des einen, den äusseren Führungszylinder (31) bildenden Elements der teleskopartig längenveränderlichen Einheit durch die Elemente (57, 58 bzw. 53, 54) der Verriegelungseinheit (16) miteinander koppelbar sind.

2. Fahrwerk nach Anspruch 1, dadurch gekennzeichnet, dass die Schwenklagerteile (28 bzw. 20) die formschlüssig in Eingriff bringbaren Verriegelungsglieder (54 bzw. 58) tragen.

3. Fahrwerk nach Anspruch 1 oder 2, dadurch gekennzeichnet, dass von den Teleskopelementen (25, 26 bzw. 17, 31) der längenveränderlichen Einheit (15) das äussere bzw. innere Element (31 bzw. 17) als Führungszylinder dient und je mit dem am Fahrwerksbein (3) bzw. an der Flugzeugzelle (1) angelenkten Schwenklagerteil (28 bzw. 20) eine Einheit bildet.

## Claims

1. Retractable aircraft landing gear containing a supporting strut (12) the extended length of which can be adjusted between a minimum value in the braced position and a large extended length with the aid of a telescopic-type variable length unit (15) and a unit (16) which locks the articulated members of the supporting strut on the airframe (1) or the landing gear leg (3), in the operating position, whereby the pivot bearing members (20 or 28) which are connected in each case to the airframe (1) or the landing gear leg (3) can be coupled together directly in the supported position by the components (57, 58 or 53, 54) of the locking unit, characterised in that
   a) the locking unit (16) and/or its operating system (38, 40) is arranged so that it is located coaxially on the outside with the telescopic-type variable length unit (15) and in that
   b) the pivot bearing members (20 and 28) which in each case are connected to the airframe (1) or the landing gear leg (3) can be coupled together through the components (57, 58 or 53, 54) of the locking unit (16) whilst bypassing the components (17, 25, 26) of the telescopic- type variable length unit (15) with the exception of one of the components of the telescopic-type variable length unit which forms the external guide cylinder (31).

2. Landing gear according to claim 1, characterised in that the pivot bearing members (28 and 20) carry the locking members (54 and 58) which can be positively connected to each other,

3. Landing gear according to claim 1 or 2, characterised in that the external or internal component (31 or 17) of the telescopic components (25, 28 or 17, 31) of the variable length unit (15) is used as a guide cylinder and forms in each case a unit with the pivot bearing member (28 or 20) which is attached to the landing gear leg (3) or the airframe (1) in an articulated arrangement.

## Revendications

1. Train d'atterrissage escamotable pour avion, comprenant une jambe de force de support (12) dont la longueur en direction longitudinale peut être réglée entre une valeur minimale en position d'arc-boutage et une longueur déployée importante à l'aide d'une unité télescopique (15) de longueur modifiable, et une unité (16) verrouillant en position de travail les organes d'articulation de la jambe de force sur la cellule (1) de l'avion ou sur la jambe (3) du train d'atterrissage, les paliers de pivotement (20 et respectivement 28) reliés à la cellule (1) de l'avion et respectivement à la jambe (3) du train d'atterrissage pouvant être accouplés directement l'un à l'autre en position de support par les éléments (57, 58 et respectivement 53, 54) de l'unité de verrouillage, caractérisé en ce que
   a) l'unité de verrouillage (16) et/ou son dispositif de commande (38, 40) est montée coaxialement à l'extérieur de l'unité télescopique (15) de longueur modifiable et
   b) les paliers de pivotement (20 et respectivement 28) reliés à la cellule (1) de l'avion et respectivement à la jambe (3) du train d'atterrissage peuvent être accouplés l'un à l'autre par l'intermédiaire des éléments (57, 58 et respectivement 53, 54) de l'unité de verrouillage (16) en dérivation des éléments (17, 25, 26) de l'unité télescopique (15) de longueur modifiable à l'exception de l'un des éléments de l'unité télescopique de longueur modifiable formant le cylindre de guidage extérieur (31).

2. Train d'atterrissage selon la revendication 1, caractérisé en ce que les paliers de pivotement (28 et respectivement 20) supportent en correspondance de formes les organes de verrouillage (54 et respectivement 58) pouvant être amenés en prise.

3. Train d'atterrissage selon la revendication 1 ou 2, caractérisé en ce que parmi les éléments télescopiques (25, 26 et respectivement 17, 31) de l'unité de longueur modifiable (15), l'élément extérieur et respectivement l'élément intérieur (31 et respectivement 17) servent de cylindre de guidage et forment à chaque fois une unité avec les paliers de pivotement (28 et respectivement 20) raccordés à la jambe (3) du train d'atterrissage et respectivement à la cellule (1) de l'avion.

# FIG. 1

# FIG. 2

# FIG. 3

FIG. 4